**Europäisches Patentamt**

(19) **European Patent Office**

**Office européen des brevets**

(11) Publication number: **0 346 676 B1**

(12) **EUROPEAN PATENT SPECIFICATION**

(45) Date of publication of patent specification:
24.07.91 Bulletin 91/30

(51) Int. Cl.⁵: **F16G 5/20**

(21) Application number: **89109701.6**

(22) Date of filing: **30.05.89**

(54) **Driving belt.**

(30) Priority: **16.06.88 IT 2098788**

(43) Date of publication of application:
**20.12.89 Bulletin 89/51**

(45) Publication of the grant of the patent:
**24.07.91 Bulletin 91/30**

(84) Designated Contracting States:
**AT BE CH DE ES FR GB GR LI LU NL SE**

(56) References cited:
**FR-A- 1 034 138**
**US-A- 2 728 239**
**US-A- 2 802 511**
**US-A- 4 228 692**
**US-A- 4 332 576**
**US-A- 4 647 278**
**PATENT ABSTRACTS OF JAPAN, vol. 8, no. 234 (M-334)[1671], 26th October 1984; & JP-A-59 113 337 (BANDOO KAGAKU K.K.) 30-06-1984**

(73) Proprietor: **PIRELLI TRASMISSIONI INDUSTRIALI S.p.A.**
**Piazzale Cadorna, 5**
**I-20123 Milan (IT)**

(72) Inventor: **Di Giacomo, Tommaso**
**Via Colle Granaro, 179**
**I-66016 Guardiagrelle Chieti (IT)**
Inventor: **Arces, Domenico**
**Viale Luigi De Laurentis, 17**
**I-70100 Bari (IT)**

(74) Representative: **Giannesi, Pier Giovanni et al**
**Pirelli S.p.A. Direzione Brevetti Piazzale Cadorna, 5**
**I-20123 Milano (IT)**

## Description

The present invention refers to a driving belt and more particularly to a driving belt of elastomeric material or the like comprising a lower portion with at least two lateral, opposite and convergent surfaces, intended to transmit forces of friction necessary for the motion on corresponding surfaces of at least two pulleys.

As known, a belt of the above mentioned type generally comprises an outer part under traction, i.e. apt to be subject to tensile stresses during the winding step of the belt on the pulley, a lower part apt to be subject to compressive stresses and consequently called inner compressive part, a part interposed between the two previous ones apt to bear the load that it is wished to transmit between belt and pulley.

The central part of the belt usually is formed by elongate inextensible elements, in particular traction resistant cords, placed side by side and extended longitudinally.

The inner part of the belt comprises, as already said, at least two lateral, opposite and convergent surfaces.

The belt can be constituted at the inner compressive part by two only convergent surfaces having a configuration defined by a trapezium in a portion transversal to the belt maximum extension, assuming thus the definition of V-belt.

The transmission of motion takes place among the convergent sides of the V-belt and the two corresponding surfaces of the two pulleys : driven pulley and driving pulley, respectively.

According to another solution the belt can be constituted by a plurality of V-belts, i.e. by a plurality of lower portions, each one provided with two opposite and convergent surfaces, arranging for joining together the various belts at the upper part by means of a connecting tape or the like.

A type of belt which is flat at the tensile part and grooved on the compressive inner surface, having small transversal thicknesses, usually comprised between 3 and 16 mm is also known and used.

This type of belt, known as grooved belt, comprises on the inner surface of the compressive part a plurality of longitudinal ribs, particularly in the form of a "V", alternate with grooves or longitudinal cavities ; the grooved belt by the compressive inner surface transmits forces of friction necessary for the motion when it is in contact with the outer surface of the two pulleys provided on their turn with ribs and circumferential grooves corresponding to the belt ones.

The previously mentioned driving belts during their winding for a certain arc around pulleys having a small radius of curvature are subject to strong compressive stresses in the lower part with contractions tending to originate wavings which spread into the mass of elastomeric material anywhere they find a way out.

In particular, the mentioned wavings can spread up to the surface comprised between the cords bearing the load and the elastomeric material causing thus a relative detachment between the cords and the elastomeric material and in a short while the end of the belt.

Particularly, the compressive condition and the contractions deriving therefrom are much stronger in the grooved belts where owing to the tapered portion of the longitudinal ribs, the collapsing of the ribs can take place with a consequent lateral distorsion of the same and an irregularity by the belt longitudinal ribs of being inserted between the grooves of the pulleys.

Further solutions suitably provided for overcoming the mentioned drawback are already known.

In fact, driving belts provided with cavities arranged transversely in the lower compressive part are realized.

As an example, the U.S. patents No. 2,728,239 and No. 2,802,531 disclose substantially flat belts of elastomeric material comprising on the inner surface of the compressive part both a plurality of longitudinal ribs alternate with longitudinal cavities and a plurality of cavities extended transversely of the belt in order to greatly increase the belt flexibility to easily fit the same to pulleys having accentuated curvatures.

Unfortunately, even if on one side these solutions reduce favourably the compressive deformations and the drawbacks connected thereto, on the other they produce a further drawback which can be found in an accentuated noise in connection with the belts devoid of transversal cavities.

The noise of the known belts is affected by various elements, as for instance the number of revolutions of the pulleys, the materials both of the belts and the pulleys, the mechanical parts associated to the pulleys, the portion of belt comprised between the pulleys, the tension of the belt.

In spite of the complexity of the involved phenomena it can be stated that the effect of the noise can be caused at least in a non-negligible measure, by the air that being entered between the transversal cavities before the belt winding on the pulleys, remains entrapped among them and the enclosing or guiding surfaces of the pulleys, originating a loud humming or buzzing sound owing to its sudden escape from the spaces where it was enclosed, when the belt does no longer act on the pulleys.

The sequence of transversal cavities arranged according to a determined pitch, turns into a continuous repetition of the phenomenon up to reach levels of noise unacceptable for the user of the driving device.

Therefore the aim of the present invention is a driving belt as previously said which is able to overcome all the mentioned drawbacks and at the same time can be wound, without risks for its integrity, on the pulleys

2

having accentuated curvatures without that the adopted solution produces the raising of unacceptable noises.

The object of the present invention is a belt of elastomeric material suitable for transmitting forces with at least two pulleys, said belt comprising an outer part under traction, an inner part under compression, a part interposed between the outer one and the inner one, apt to transport the load, said compressive part comprising in longitudinal direction at least two lateral, opposite and convergent surfaces, intended to transmit forces of friction with the corresponding surfaces of a pulley and a plurality of cavities directed transversely to said lateral surfaces, said transversal cavities originating a plurality of protuberances, said belt being characterized by the fact that the protuberances and the transversal cavities placed the one after the other are delimited by an undulated profile formed by curvilinear sections substantially in the form of an arc of circle, the curvilinear section of each protuberance having a curvature opposite to the curvilinear sections of the adjacent transversal cavities, the ratio between the pitch and the maximum depth of the transversal cavities being comprised between 8 and 20, the ratio between the radius of curvature of the transversal cavities and the maximum depth of the transversal cavities being comprised between 3 and 6.

The present invention will be better described with reference to the attached sheets of drawing in which :

FIGURE 1 — is a cross-section of an embodiment of a belt according to the invention ;
FIGURE 2 — is a cross section of the belt shown in figure 1 along line II-II ;
FIGURE 3 — is a cross section of a belt compared with the belt of the invention of figures 1 and 2 ;
FIGURE 4 — represents a section of the belt of figure 3 along line IV-IV ;
FIGURE 5 — shows a scheme of the noise comparison test for the belts of figures 1, 2, 3 and 4, respectively;
FIGURE 6 — is a diagram of the results obtained from the noise test of the belt of figures 1, 2, 3 and 4 ;
FIGURE 7 — shows an inner lateral profile of a belt according to the invention overlapped to the inner lateral profile of a belt of the state of the art.

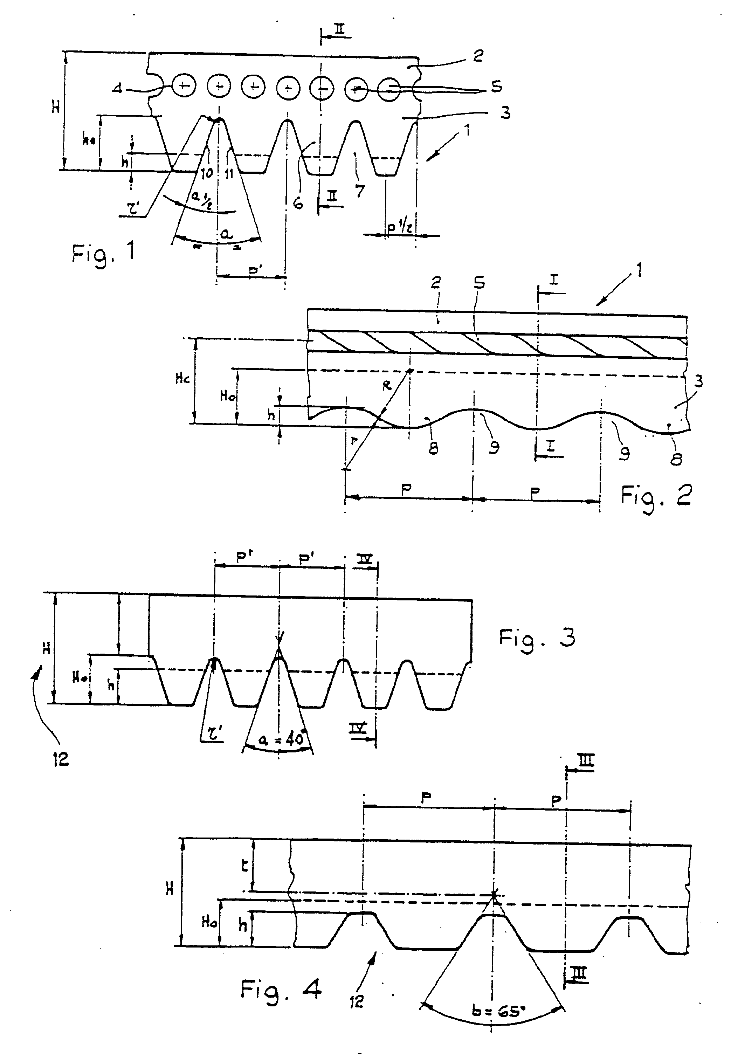

In figure 1 reference numeral 1 represents a belt of the grooved type formed by a substantially flat body of elastomeric material divided into an upper part 2 apt to be subject to traction, a lower part 3 apt to be subject to compression, a part 4 interposed between the previous ones intended to bear the load of the driving device thanks to the presence of a plurality of elongate elements 5 placed side by side and having characteristics of high tensile strength.

The elongate elements are arranged on a plane which defines the "neutral axis" or the "pitch surface" of the belt and according to some possible embodiments, said elements can be constituted by cords of nylon, aramidic fiber, polyester fiber, glass fiber or materials substantially equivalent for their inextensibility characteristics.

The lower part 3 (figure 1) comprises a plurality of longitudinal ribs 6 alternate with longitudinal cavities 7 (figure 2) a plurality of transversal protuberances 8 alternate with transversal cavities 9, these latter having depths that in the example are shorter than the longitudinal ones, as well as it is stressed by the dashed lines of figure 1.

The example of the belt of figure 1 shows longitudinal ribs 6 in the form of a trapezium and longitudinal cavities 7 in the form of a "V", but it is understood that for the purposes of the invention the longitudinal ribs could have the form of a "V" too.

The surface of the lower part 3 of the belt is intended to transmit forces of friction with corresponding surfaces of at least two pulleys (not shown) provided on their turn with ribs extended circumferentially and alternate with cavities extended circumferentially too according to known solutions.

Therefore the lateral, opposite and convergent surfaces 10 and 11 of each rib are intended to transmit the motion by friction.

The belt 1 is characterized by the fact that the sequence (figure 2) of transversal protuberances 8 alternate with transversal cavities 9 is delimited by an undulated profile, without solutions of continuity, formed by curvilinear sections defined by an arc of circle or by arcs which approach to arcs of circle.

Therefore the present belt comprises longitudinal ribs which have on the head surface an undulated surface instead of a flat one.

The arc of circle shaped profile of each protuberance 8 is defined by a radius R and has a curvature opposite to the arc of circle shaped profile of the transversal cavity 9 defined by a radius r.

The essential characteristic of the present invention is constituted by the fact that the ratio between the pitch "p" of the sequence of protuberances 8 of the cavities 9 and the maximum depth "h" of the cavities 9 is comprised between 8 and 20, extremes included, and moreover by the fact that the ratio between the radius of curvature "r" of the transversal cavities 9 and the depth "h" of the cavities themselves is comprised between 3 and 6, extremes included.

Further, from the previously mentioned characteristics it results that the relationship between the radius R and the radius r of the arc of circle shaped sections depends on the previously cited parameters and is determined by the following expression :

$$(R + r)^2 = (P/2)^2 + (R + r - h)^2$$

to which the final expression corresponds :

$$(R + r) = \frac{p^2 + 4 \times h^2}{8 \, h}$$

Preferably the ratio p/h is at most equal to 14 and still more preferably is comprised between 8 and 10.

The ratio r/h is comprised between 3.8 and 4.5 and still more preferably between 3.5 and 4.2.

Moreover the distance between the axis of the cords 5 and the head of the longitudinal ribs is indicated with $H_c$. It has been thought to fix a ratio $h/H_c$ comprised between 0.15 and 0.6 and preferably between 0.2 and 0.4.

According to a preferred embodiment of the present invention the belt of figures 1 and 2 is defined by the following values :
— total height of the belt, H = 3.6 mm ;
— height of the longitudinal ribs 6, Ho = 1.6 mm ;
— pitch between the longitudinal ribs 6, p′ = 2.34 mm ;
— angle between the surfaces 10 and 11 of the longitudinal ribs placed side by side, a = 40° (degrees) ;
— radius between the surfaces 10 and 11 of the longitudinal ribs placed side by side, r′ = 0.1 mm ;
— depth of the transversal cavities 9, h = 0.53 ;
— pitch of the transversal cavities 9, P = 4.4 ;
— radius of curvature of the arc of circle of the transversal cavity 9, r = 2.1 ;
— radius of curvature of the arc of circle of the protuberances 8, R = 2.31.

The now described belt, thanks to the presence of the transversal cavities 9 and in particular to the opening outwards of the cavities as shown in figure 2, permits favourably the winding of the belt on pulleys having accentuated curvatures avoiding collapsing phenomena of the longitudinal ribs 6 because of the buckling load.

The flexibility increase of the present belt is obtained by means of a contemporaneous and appreciable reduction of the noise as it can be noted from the test carried out by comparing a belt provided with an undulated profile and ratios P/h and r/h as previously indicated and a belt devoid of the features of the invention.

The belt 12 compared with the belt according to the present invention is identified by the following dimensional data with the parameters shown in figures 3 and 4 :
— total height of the belt, H = 3.6 mm ;
— height of the longitudinal ribs, Ho = 1.6 mm ;
— pitch between the longitudinal ribs, p′ = 2.34 mm ;
— angle "a" between the opposite surfaces of longitudinal ribs placed side by side, a = 40° (degrees) ;
— radius between the longitudinal ribs placed side by side, r′ = 0.25 mm ;
— depth of the transversal cavities, h = 1.2 mm ;
— pitch of the transversal cavities, p = 4.7 mm ;
— angle "b" between the opposite sides of the transversal cavities, b = 65° (degrees) ;
— vertex of angle "b" at dimension lines, t = 1.8 mm ;
— trapezium shape of the transversal cavities and protuberances as shown in figure 3.

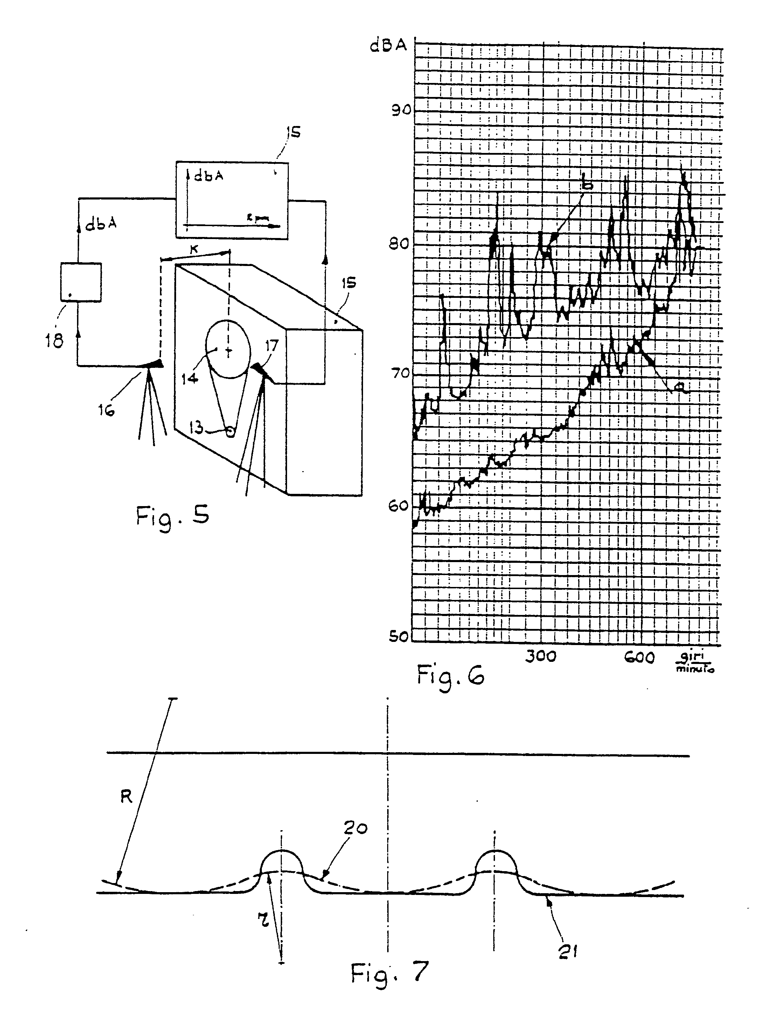

The noise test has been carried out by means of the equipment shown in figure 5 as follows.

At different time the belts 1 and 12 have been arranged between the two pulleys 13 and 14 of a washing machine 15 having a device (not shown) for varying the number of revolutions of the washing machine drum from 0 to 1200 r.p.m.

For each belt the total noise has been registered on varying of the number of revolutions by using a microphone 16 placed at the same level as the axis of the washing machine drum and at a distance K of 50 cm from this latter.

The number of revolutions has been detected through a stroboscopic probe 17 on the driven pulley.

The number of revolutions and the noise data conveniently amplified by a device 18, respectively measured in revolutions per minute and decibel (d b A), have been sent to a recorder which has plotted for the belts 1 and 12 two graphs a and b.

The graphs a and b are shown in figure 6 in double logarithmic scale having recorded on the ordinates the total noise on varying of the number of revolutions recorded on the abscissae.

The results of the test clearly prove through a simple comparison between the graphs a and b, the elimination of the noise peaks, i.e. the more troublesome ones, those which can be felt and found in the belt 12.

In substance, the graph "a" stresses the flattening out of the noise curve of the belt 1 according to the invention with respect to the belt 12.

Moreover the comparison between the graphs a and b shows a constant lowering, substantially for all the mostly interested speeds, of noise values of the belt 1 with respect to the belt 12 devoid of the characteristics of the present invention.

The Applicant, in the attempt of explaining the reached optimal results and consequently a reduced noise with a contemporaneous increase of the present belt flexibility supplies the following hypothetical explanation.

By way of example, a grooved belt having a lateral undulated profile 20 (figure 7) according to the present invention, is taken into consideration. A profile 21 of a belt of the state of the art is overlapped to the profile 20.

The belt of the state of the art must have the same dimensional values as the belt of the present invention, the protuberances and the transversal cavities must have the same pitch, but with the difference that the transversal protuberances are delimited by a flat profile instead of an undulated one and the transversal cavities have a much narrower and deeper opening than that of the undulated profile, more or less with the proportions of figure 7.

As it can be noted, the lateral profile of the present belt is characterized for the sequence of waves gradually and continuously passing from a curvature to an opposite curvature, while the lateral profile of the known belt is characterized for the sequence of flat sections separated by sudden incline variations at the transversal cavities.

Briefly, it can also be stated that the lateral profile of the belt according to the invention is characterized by having a smooth countoured profile and that of the known belt for its sudden angular change of contour profile.

The two concepts that found in the compared belts show in practice for the belt according to the invention, a removal of elastomeric material according to a wider area involving essential parts both in length and in width of each longitudinal rib, while for the known belt, a removal of material in depth forming in practice narrow and deep transversal grooves.

Just owing to the contrasting characteristics of the known belts and those of the present invention a hypothesis can be advanced to explain the results of the noise test shown in figure 6.

In fact it can be believed that the air entrapped in the narrow and deep transversal grooves of the known belt, very probably, tends to escape more or less instantly when the belt leaves the relative pulley originating thus an intense and repeated loud humming or buzzing sound for that determined pitch, while the air entrapped in the transversal cavities of the belt having a gradually undulated profile, has the possibility of escaping with the same gradualness from the transversal cavities when the belt leaves the relative pulley, with the consequence that the previously entrapped air spreads now into a very wide zone avoiding whizzes and making uniform and acceptable the residual noise.

Another hypothesis to explain the phenomenon is the following one.

The belt of figure 7 defined by the profile 21 has sudden passages of section between the protuberances and the adjacent transversal cavities, originating thus different transversal deformations from one section to the other with equal reaction stress on the pulley.

In the cited circumstances the belt having the profile 21 by entering into the pulley produces bumps depending on the impact of each protuberance against the pulley surfaces.

The belt according to the invention having the undulated profile 20, being devoid of sudden passages of section is not subject to the strong differences of transversal deformations and therefore it does not produce at its entry into the pulley the noise peaks caused by the impact of each protuberance.

As far as the values of the previously mentioned ratios p/h and r/h are concerned, the following hypotheses can be made to explain the results achievable with the transversal cavities defined by the cited ratios.

The longitudinal ribs of the grooved belt during the winding with a pulley are subject to a compressive condition with the consequence of contractions which become much more high at the final tapered part of the longitudinal rib.

Having already established a certain depth h of the transversal cavity, when values of ratio p/h lower than the previously indicated minimum value are reached, the pitches between one transversal cavity and the other could be too small and this could lead to a geometrical condition in which the transversal cavities result to be too near with the risk of unacceptable noise because of a too near repetition of the noise caused by the escape of air from the cavities.

In other words, in some solutions when values of p/h lower than the minimum value indicated are used, not satisfactory results could be obtained.

Then, when values p/h higher than the maximum value indicated in the present invention are reached, a condition of too wide protuberance could arise and in some cases the compressive state acting on said protuberance could cause its collapsing.

The second geometrical condition linked to the ratio r/h is also important for the purposes of the invention.

To this purpose the following hypothesis could be made in order to explain the optimal results that can be reached.

After defining the ratio p/h and the value of h, when values of ratio r/h smaller than the minimum value of the present invention are used, the longitudinal ribs would have lengths that could result too great ; consequently, during the winding step of the belt on the pulley it is possible to go toward values of instability due to the compression on the longitudinal rib.

If values r/h greater than the maximum limit established by the present invention should be used, it would be possible to reach values of the radius of curvature of the transversal cavities too great, in practice a situation where having removed too much elastomeric material from the longitudinal ribs, the transversal load bearing capacity between the belt and the pulley should be reduced.

The present invention described in connection with a particular embodiment of the belt having a grooved inner surface of a pre-determined thickness is likewise applicable to grooved belts having dimensions different from what described.

In particular it is here said that the grooved belt can have a transversal section with total thicknesses variable from 2.8 to 15.9 mm, longitudinal ribs with pitch from 1.6 to 9.4 mm, height of the longitudinal ribs comprised between 0.9 and 8.5 mm, number of ribs from 2 to 20 and over if necessary.

Moreover it is stressed that the present invention as described and illustrated up to now with reference to the characteristics of a grooved belt, can be applied likewise to belts of another type on condition that the compressive part of said belts has at least two lateral, opposite and convergent surfaces intended to act by friction with corresponding surfaces of a pulley and in which to permit the winding of the belt on pulleys having small radii of curvature, recourse is made to transversal cavities.

For instance the invention can be applied to trapezoidal belts or V-belts or also to a plurality of V-belts joined together by means of a tape or like connecting element arranged in the upper part of the various belts.

Moreover the invention is likewise applicable to belts which have in place of the longitudinal cords, other continuous or discontinuous elements able to realize the part of the belt intended to bear the load.

For instance fabrics or also discontinuous fibers could be provided in place of the cords with such measure and dimension as to originate a section having a greater resistance with respect to the contiguous ones.

For instance the undulated profile of the cavities and transversal protuberances delimited by arcs of circle can be delimited by curvilinear arcs of different shape which approach to arcs of circle and produce the same effects, for example to cite only a few of many arcs of parabola, arcs of ellipse, arcs of hyperbola.

## Claims

1. Belt (1) of elastomeric material suitable for transmitting forces with at least two pulleys, said belt comprising an outer part (2) under traction, an inner part (3) under compression, a part (4) interposed between the outer one and the inner one apt to transport the load, said compressive part comprising in longitudinal direction at least two lateral, opposite and convergent surfaces, intended to transmit forces of friction with the corresponding surfaces of a pulley and a plurality of cavities (9) directed transversely to said lateral surfaces, said transversal cavities (9) originating a plurality of protuberances (8), said belt being characterized by the fact that the protuberances (8) and the transversal cavities (9) placed the one after the other are delimited by an undulated profile (20) formed by curvilinear sections substantially in the form of an arc of circle, the curvilinear section of each protuberance having a curvature opposite to the curvilinear sections of the adjacent transversal cavities, the ratio between the pitch (p) and the maximum depth (h) of the transversal cavities being comprised between 8 and 20, the ratio between the radius of curvature (r) of the transversal cavities (9) and the maximum depth (h) of the transversal cavities being comprised between 3 and 6.

2. Belt as in claim 1, characterized by the fact that the part (3) under compression comprises in longitudinal direction a plurality of pairs of lateral, opposite and convergent surfaces (10, 11), alternate with longitudinal cavities (7) and a plurality of said transversal cavities (9).

3. Belt as in claim 1 or 2, characterized by the fact that the ratio between the pitch (p) of the transversal cavities (9) and the maximum depth (4) is at the most equal to 14.

4. Belt as in any one of the previous claims, characterized by the fact that the ratio between the radius of curvature (r) of the transversal cavity (9) and the depth (h) is comprised between 3.5 and 4.5.

5. Belt as in claim 1, characterized by the fact of comprising a flat part (2) under traction and a part (3) under compression whose inner surface is constituted by a plurality of lateral, opposite and convergent surfaces (10, 11), in the form of longitudinal ribs (6) alternate with longitudinal cavities (7) and by a plurality of transversal cavities (9) and protuberances (8).

6. Belt as in claim 5, characterized by the fact that the total thickness (H) is comprised between 2.8 and 15.9 mm.

7. Belt as in claim 5, characterized by the fact that the pitch (p) of the longitudinal ribs (6), measured in a transversal plane is comprised between 1.60 and 9.40 mm.

8. Belt as in claim 5, characterized by the fact that the height Ho of the longitudinal ribs (6) is comprised between 0.9 and 8.5 mm.

9. Belt as in claim 5, characterized by the fact that the longitudinal ribs (6) are comprised between 2 and 20.

10. Belt as in claim 5, characterized by the fact that the ratio between the pitch (P) of the transversal cavities (9) and the maximum depth (h) of the same is comprised between 8 and 10.

11. Belt as in claim 5, characterized by the fact that the ratio between the radius (r) of curvature of the transversal cavities (9) and the depth (h) of the transversal cavities (9) is comprised between 3.8 and 4.2.

12. Belt as in claim 1, characterized by the fact that said lateral, opposite and convergent surfaces (10, 11), constitute the sides of a trapezoidal belt.

13. Belt as in claim 5, characterized by the fact that the ratio between the depth (h) of the transversal cavities (9) and the height (He) measured between the axis of the cords (5) and the head of the longitudinal ribs (6) is comprised between 0.25 and 0.6.

## Patentansprüche

1. Riemen (1) aus elastomerem Material zum Übertragen von Kräften mit wenigstens zwei Riemenscheiben, wobei der Riemen einen äußeren Teil (2), der unter Zugbeanspruchung steht, einen inneren Teil (3), der unter Druckbeanspruchung steht und einen Teil (4) aufweist, der zwischen dem äußeren Teil und dem inneren Teil angeordnet ist und die Last tragen bzw. transportieren kann, und wobei der unter Druckbeanspruchung stehende Teil in Längsrichtung wenigstens zwei seitliche, entgegengesetzte und konvergierende Flächen, die dazu vorgesehen sind, Reibungskräfte mit den entsprechenden Flächen einer Riemenscheibe zu übertragen, und eine Mehrzahl von Vertiefungen (9) umfaßt, die zu den seitlichen Flächen quer gerichtet sind und die zu einer Mehrzahl von Vorsprüngen (8) führen, **dadurch gekennzeichnet**, daß die Vorsprünge (8) und die Quervertiefungen (9), die hintereinander angeordnet sind, durch ein Wellenprofil (20) begrenzt sind, welches durch gekrümmte Abschnitte im wesentlichen in Form eines Kreisbogens gebildet ist, wobei der gekrümmte Abschnitt jedes Vorsprunges eine Krümmung hat, die zu den gekrümmten Abschnitten der benachbarten Quervertiefungen entgegengesetzt ist, das Verhältnis zwischen der Teilung (p) und der maximalen Tiefe (h) der Quervertiefungen zwischen 8 und 20 liegt, und wobei das Verhältnis zwischen dem Krümmungsradius (r) der Quervertiefungen (9) und der maximalen Tiefe (h) der Quervertiefungen zwischen 3 und 6 liegt.

2. Riemen nach Anspruch 1, dadurch gekennzeichnet, daß der unter Druckbeanspruchung stehende Teil (3) in Längsrichtung eine Mehrzahl von Paaren von seitlichen gegenüberliegenden und konvergenten Flächen (10, 11), die mit Längsvertiefungen (7) abwechseln, und eine Mehrzahl der Quervertiefungen (9) umfaßt.

3. Riemen nach Anspruch 1 oder 2, dadurch gekennzeichnet, daß das Verhältnis zwischen der Teilung (p) der Quervertiefungen (9) und der maximalen Tiefe (h) höchstens gleich 14 ist.

4. Riemen nach irgendeinem der vorhergehenden Ansprüche, dadurch gekennzeichnet, daß das Verhältnis zwischen dem Krümmungsradius (r) der Quervertiefung (9) und der Tiefe (h) zwischen 3,5 und 4,5 liegt.

5. Riemen nach Anspruch 1, dadurch gekennzeichnet, daß er einen ebenen unter Zugbeanspruchung stehenden Teil (2) und einen unter Druckbeanspruchung stehenden Teil (3) umfaßt, dessen Innenfläche durch eine Mehrzahl von seitlichen, gegenüberliegenden und konvergenten Flächen (10, 11) in der Form von Längsrippen (6), die sich mit Längsvertiefungen (7) abwechseln, und durch eine Mehrzahl von Quervertiefungen (9) und Vorsprüngen (8) dargestellt ist.

6. Riemen nach Anspruch 5, dadurch gekennzeichnet, daß die Gesamtdicke (H) zwischen 2,8 und 15,9 mm liegt.

7. Riemen nach Anspruch 5, dadurch gekennzeichnet, daß die Teilung (p) der Längsrippen (6), gemessen in einer Querebene, zwischen 1,60 und 9,40 mm liegt.

8. Riemen nach Anspruch 5, dadurch gekennzeichnet, daß die Höhe (Ho) der Längsrippen (6) zwischen 0,9 und 8,5 mm liegt.

9. Riemen nach Anspruch 5, dadurch gekennzeichnet, daß zwischen 2 und 20 Längsrippen (6) vorhanden sind.

10. Riemen nach Anspruch 5, dadurch gekennzeichnet, daß das Verhältnis zwischen der Teilung (p) der Quervertiefungen (9) und der maximalen Tiefe (h) derselben zwischen 8 und 10 liegt.

11. Riemen nach Anspruch 5, dadurch gekennzeichnet, daß das Verhältnis zwischen dem Krümmungsradius (r) der Quervertiefungen (9) und der Tiefe (h) der Quervertiefungen (9) zwischen 3,8 und 4,2 liegt.

12. Riemen nach Anspruch 1, dadurch gekennzeichnet, daß die seitlichen, gegenüberliegenden und konvergenten Flächen (10, 11) die Seiten eines Trapezriemens darstellen.

13. Riemen nach Anspruch 5, dadurch gekennzeichnet, daß das Verhältnis zwischen der Tiefe (h) der Quervertiefungen (9) und der Höhe (Hc), gemessen zwischen der Achse der Schnüre (5) und dem Kopf der Längsrippen (6) zwischen 0,25 und 0,6 liegt.

## Revendications

1. Courroie (1) en matière élastomère apte à transmettre des forces avec au moins deux poulies, ladite courroie comprenant une partie extérieure (2) en traction, une partie intérieure (3) en compression, une partie (4) interposée entre la partie extérieure et la partie intérieure apte à transporter l'effort, ladite partie en compression comprenant, dans sa direction longitudinale, au moins deux surfaces latérales, opposées et convergentes, destinées à transmettre des forces de friction avec les surfaces correspondantes d'une poulie et une pluralité de cavités (9) dirigées transversalement par rapport auxdites surfaces latérales, lesdites cavités transversales (9) engendrant une pluralité de protubérances (8), ladite courroie étant caractérisée par le fait que les protubérances (8) et les cavités transversales (9) placées l'une après l'autre sont délimitées par un profil ondulé (20) formé par des sections curvilignes sensiblement en forme d'arc de cercle, la courbure de la section curviligne de chaque protubérance étant opposée à celle des sections curvilignes des cavités transversales adjacentes, le rapport entre le pas (p) et la profondeur maximale (h) des cavités transversales étant compris entre 8 et 20, le rapport entre le rayon de courbure (r) des cavités transversales (9) et la profondeur maximale (h) des cavités transversales étant compris entre 3 et 6.

2. Courroie selon la revendication 1, caractérisée par le fait que la partie (3) en compression comprend, en direction longitudinale, une pluralité de paires de surfaces (10, 11) latérales, opposées et convergentes alternant avec des cavités longitudinales (7) et une pluralité desdites cavités transversales (9).

3. Courroie selon la revendication 1 ou 2, caractérisée par le fait que le rapport entre le pas (p) des cavités transversales (9) et la profondeur maximale (h) est au plus égale à 14.

4. Courroie selon l'une quelconque des revendications précédentes, caractérisée par le fait que le rapport entre le rayon de courbure (r) de la cavité transversale (9) et la profondeur (h) est compris entre 3,5 et 4,5.

5. Courroie selon la revendication 1, caractérisée par le fait qu'elle comprend une partie plate (2) en traction et une partie (3) en compression dont la surface intérieure est constituée par une pluralité de surfaces latérales, opposées et convergentes (10, 11) en forme de rainure longitudinale (6) alternant avec des cavités longitudinales (7) et par une pluralité de cavités transversales (9) et de protubérances (8).

6. Courroie selon la revendication 5, caractérisée par le fait que l'épaisseur totale (H) est comprise entre 2,8 et 15,9 mm.

7. Courroie selon la revendication 5, caractérisée par le fait que le pas (p) des rainures longitudinales (6), mesuré dans un plan transversal, est compris entre 1,60 et 9,40 mm.

8. Courroie selon la revendication 5, caractérisée par le fait que la haute (HO) des nervures longitudinales (6) est comprise entre 0,9 et 8,5 mm.

9. Courroie selon la revendication 5, caractérisée par le fait que le nombre des nervures longitudinales (6) est compris entre 2 et 20.

10. Courroie selon la revendication 5, caractérisée par le fait que le rapport entre le pas (p) des cavités transversales (9) et la profondeur maximale (h) de celles-ci est compris entre 8 et 10.

11. Courroie selon la revendication 5, caractérisée par le fait que le rapport entre le rayon (r) de courbure des cavités transversales (9) et la profondeur (h) des cavités transversales (9) est compris entre 3,8 et 4,2.

12. Courroie selon la revendication 1, caractérisee par le fait que lesdites surfaces latérales opposées et convergentes (10, 11) constituent les côtes d'une courroie trapezoïdale.

13. Courroie selon la revendication 5, caracterisée par le fait que le rapport entre la profondeur (h) des cavités transversales (9) et la hauteur (HC) mesurée entre l'axe des câbles (5) et la tête des nervures longitudinales (6) est compris entre 0,25 et 0,6.

Fig. 1

Fig. 2

Fig. 3

Fig. 4

Fig. 5

Fig. 6

Fig. 7